## Europäisches Patentamt

## European Patent Office

## Office européen des brevets

(11) Veröffentlichungsnummer: **0 159 312**
**A1**

(12) # EUROPÄISCHE PATENTANMELDUNG

(21) Anmeldenummer: **85890045.9**

(22) Anmeldetag: **22.02.85**

(51) Int. Cl.⁴: **G 01 P 3/64**
**G 01 C 22/02, G 07 C 1/22**

---

(30) Priorität: **27.02.84 AT 631/84**

(43) Veröffentlichungstag der Anmeldung:
**23.10.85 Patentblatt 85/43**

(84) Benannte Vertragsstaaten:
**AT BE CH DE FR GB IT LI LU NL SE**

(71) Anmelder: **Rieder, Heinz**
**Riedersbach 90**
**A-5120 St. Pantaleon(AT)**

(71) Anmelder: **Schwaiger, Max**

**A-5121 Ostermiething 298(AT)**

(72) Erfinder: **Rieder, Heinz**
**Riedersbach 90**
**A-5120 St. Pantaleon(AT)**

(72) Erfinder: **Schwaiger, Max**

**A-5121 Ostermiething 298(AT)**

(74) Vertreter: **Hübscher, Gerhard, Dipl.-Ing. et al,**
**Patentanwälte Dipl.-Ing. Gerhard Hübscher Dipl.-Ing.**
**Helmut Hübscher Dipl.-Ing. Heiner Hübscher**
**Spittelwiese 7**
**A-4020 Linz(AT)**

(54) **Einrichtung zur Messung von Weglängen oder Geschwindigkeiten.**

(57) Die insbesondere für unter Fortbewegung eines Sportgerätes (1) entlang eines Weges ausgeübten Sportarten gedachte Einrichtung besitzt einen am Sportgerät (1) angeordneten auf Wegemarken empfindlichen Empfänger, der durch Erfassung der Wegemarken Signale erzeugt und dem eine Auswerteeinheit mit Anzeige- oder Speichereinheit nachgeordnet ist. Zur eindeutigen Erfassung von Weglängen und Geschwindigkeiten ist am Sportgerät (1) selbst in dessen möglicher Fortbewegungsrichtung eine Meßstrecke vorgesehen, an deren einem Ende der Empfänger (3) und an deren anderem Ende ein auf die gleichen Wegemarken empfindlicher Empfänger oder ein Wegemarkenerzeuger (2) angebracht sind, wobei die Auswerteeinheit (4) ein Zeitmeßglied zur Bestimmung des zeitlichen Abstandes der Erfassung der gleichen Wegemarke durch die Empfänger bzw. des Setzens und Erfassens jeder Wegemarke durch Sender (2) und Empfänger (3) enthält.

FIG.3

EP 0 159 312 A1

## Einrichtung zur Messung von Weglängen oder Geschwindigkeiten

Die Erfindung betrifft eine Einrichtung zur Messung von Weglängen oder Geschwindigkeiten, insbesondere bei unter Fortbewegung eines Sportgerätes entlang eines Weges ausgeübten Sportarten, bei der am Sportgerät selbst ein auf Wegemarken empfindlicher Empfänger angeordnet ist, der durch Erfassung der Wegemarken Signale erzeugt und dem eine Auswerteeinheit und eine von dieser gesteuerte Anzeige- oder Speichereinheit nachgeordnet ist.

Vor allem ist die Erfindung zur Bestimmung von Weglängen und Geschwindigkeiten beim alpinen und nordischen Skilauf und beim Eisschnellauf gedacht, kann aber auch zur Bestimmung von Weglängen und Geschwindigkeiten beim Wassersport, insbesondere bei Booten bzw. beim Wasserskilauf und überall dort eingesetzt werden, wo Sportgeräte Verwendung finden, die keine auf der Wegstrecke abrollenden Teile aufweisen bzw. wo die Verwendung entsprechender Meßräder vermieden werden soll.

Es ist bekannt, beim Skilauf mittlere Geschwindigkeiten dadurch zu bestimmen, daß eine vorher abgesteckte Meßstrecke durchfahren und die für das Durchfahren der Meßstrecke benötigte Zeit gemessen wird. Dies setzt die Einrichtung einer Meßstrecke und die Anbringung von Zeitnehmereinrichtungen an der Meßstrecke voraus. Ein Langläufer kann beim Training bei mit Wegemarkierungen versehenen Loipen die für die Zurücklegung einer bestimmten Wegstrecke benötigte Zeit feststellen und daraus die mittlere Geschwindigkeit sowie aus den Wegemarkierungen selbst den zurückgelegten Gesamtweg ermitteln. Einen Anhaltspunkt über die zurückgelegte Wegstrecke geben auch Schrittzähler, doch bleibt hier der lediglich mit gleitenden Skiern, also unter Stockeinsatz oder im Gefälle zurückgelegte Weg unberücksichtigt. Für die Gechwindigkeitsbestimmung werden auch schon Radargeräte eingesetzt, die die Geschwindigkeit nach dem Dopplereffekt bestimmen. Hier sind äußere Meßeinrichtungen und eigenes Bedienungspersonal notwendig.

Eine Einrichtung der eingangs genannten Art ist zur Bestimmung der Fortbewegungsgeschwindigkeiten von Fahrzeugen bzw. zur Eichung von anderen Wegemeßeinrichtungen aus der DE-A-30 44 503 und der US-A-43 57 833 bekannt. Bei dieser Einrichtung ist an einem Fahrzeug oder sonstigem entlang einer Wegstrecke verstellbarem Gerät ein auf.Wegemarken empfindlicher Empfänger angeordnet und entlang der Meßstrecke sind Wegemarken vorgesehen, die entweder aus Sendern bestehen, deren Einzelsignale von dem mit dem Gerät verstellbaren Empfänger beim Überfahren erfaßt werden oder als feste Reflektoren entlang einer vorgegebenen Meß- Wegstrecke ausgebildet sind, die von einem am Gerät angebrachten Sendern angepeilt werden und die Signale zu dem Empfänger am Gerät reflektieren. Es ist also bei diesen beiden bekannten Einrichtungen die Einrichtung einer eigenen Meßstrecke notwendig.

Für Skisprung-Weitenmeßeinrichtungen ist es bekannt, im Aufsprungbereich einer Sprungschanze ortsfest induktive Meßschleifen oder aufeinander ausgerichtete Lichtschranken vorzusehen bzw. auf Erschütterungen empfindliche Sensoren anzubringen, wobei bei einigen Ausführungen am Ski selbst ein passiver Auslöser, beispielsweise ein Dauermagnet für die Sensoren angebracht wird. Entsprechende Konstruktionen sind aus der CH-A-627 836 der US-A-40 89 057 und der AT-B- 354 748 bekannt.

Aus der US-A-43 71 945 ist ein Schrittzähler bekannt, bei dem an einem Bein des Gehers ein Ultraschallsender und am anderen Bein ein Ultraschallempfänger angebracht wird und ein Rechner vorgesehen ist, der ähnlich wie eine Armbanduhr getragen werden kann. Es wird jeweils die bei der Schrittbewegung variierende Schallaufzeit zwischen Sender und Empfänger erfaßt, wobei aus Laufzeitunterschieden zwischen im gleichen Takt aufeinanderfolgenden Abfragen die Geschwindigkeit bestimmt werden kann. In der Praxis ist das Gerät bestenfalls für Geher geeignet, wobei sich Schwierigkeiten ergeben, da eine Weitwinkelabstrahlung des Ultraschalles vom Sender notwendig wäre, um in jeder Schrittstellung brauchbare Empfangsbedingungen am Empfänger zu erhalten. Es treten auch unterschiedliche Meßwerte auf, wenn der Geher beim Schritt die Knöchel knapp aneinander oder im Abstand voneinander vorbeiführt. Gleitende Bewegungen, wie beim Skilanglauf, beim Abfahrtslauf usw. sowie auch beim Wassersport können hier nicht erfaßt werden.

Aufgabe der Erfindung ist die Schaffung einer Einrichtung der eingangs genannten Art, die für die angegebenen Zwecke mit hinreichender Genauigkeit Geschwindigkeits- und Wegebestimmungen ermöglicht, ohne daß dazu aufwendige Meßstrecken eingerichtet oder der Einsatz von eigenem Personal für die Zeitnehmung notwendig ist.

Die gestellte Aufgabe wird dadurch gelöst, daß am Sportgerät selbst in dessen möglicher Fortbewegungsrichtung eine Meßstrecke vorgesehen ist, an deren einem Ende der Empfänger und an deren anderem Ende ein weiterer, auf die gleichen Wegemarken empfindlicher Empfänger oder ein Wegemarkenerzeuger angebracht sind, und daß die Auswerteeinheit ein Zeitmeßglied zur Bestimmung des zeitlichen Abstandes des Erfassens der gleichen Wegmarke durch die Empfänger bzw.

des Setzens und Erfassens jeder Wegemarke enthält.

Bei der erfindungsgemäßen Einrichtung wird eine Meßstrecke am Sportgerät selbst installiert, so daß am Gerät ein eindeutig definierter Bezugswert gegeben wird. Damit kann sich die Anbringung äußerer Wegemarken auf einfach anzubringende Einrichtungen beschränken. Äußere Wegemarken können für den Skilauf aus Querstrichen in der Piste und für Wassersportarten aus von den Empfängern erfaßbar angebrachten Leinen bestehen. Man kann aber bei einer möglichen Variante nur an einem Ende der Meßstrecke einen Empfänger vorsehen und am anderen, inbesondere in Bewegungsrichtung vorderen Ende einen Wegemarkenerzeuger anbringen. Bei einer Ausführung könnte ein solcher Wegemarkenerzeuger getaktet Farbmarkierungen im Schnee erzeugen, die vom Empfänger optisch abgelesen werden. Eine einfache und universellere Ausführung besteht aber auch hier darin, daß an einem Ende der Meßstrecke ein Ultraschall-Impulssender und am anderen Ende ein Empfänger angeordnet wird. Es wird hier die Schallaufzeit gemessen, wobei man bei Wassersportgeräten die Wahl hat, den Schall durch das Wasser oder durch die Luft zu leiten. Die einfachere Ausführung wird die Leitung des Schalles durch die Luft sein. Der Zeitunterschied der Schallaufzeit bei stillstehendem Gerät gegenüber der Schallaufzeit bei bewegtem Gerät ist ein Maß für die Geschwindigkeit. Da Empfänger und Sender mit gleicher Geschwindigkeit, also relativ zueinander nicht bewegt werden, tritt am Empfänger der Doppler-Effekt nicht auf.

Nach einer Weiterbildung berechnet ein Rechner der Auswerteeinheit die zurückgelegte Wegstrecke aus der sich aus dem zeitlichen Abstand des Auftretens bzw. Erfassens der Signale an der Meßstrecke ergebenden Geschwindigkeit und einem ihm zugeführten Zeitsignal. Die Auswerteeinheit kann hier ein Integrierglied bilden, das die zurückgelegte Wegstrecke auch bei Änderungen der Geschwindigkeit direkt anzeigt. Nach einer Weiterbildung wird die Möglichkeit vorgesehen, den Einfluß äußerer Parameter weitgehend auszuschalten. Zu diesem Zweck sind für den Rechner Eingabeeinheiten zur Berücksichtigung solcher äußerer Parameter, insbesondere der Absolutlänge der Meßstrecke, der Temperatur oder der Windgeschwindigkeit vorgesehen. Im einfachsten Fall ist die Einrichtung mit einer Kalibriertaste versehen, die bei ruhendem Ski betätigt wird, so daß die Auswertungseinheit einen dem zeitlichen Abstand zwischen Aussenden und Empfangen des Ultraschallsignales entsprechenden Wert speichern kann bzw. durch diesen Wert kalibriert wird.

Besonders bei einem als Ski ausgebildeten Sportgerät kann ein auf den Auflagedruck und/oder die Neigung empfindlicher Umschalter vorgesehen sein, der dem Rechner bzw. der Auswertungseinheit bei auf der Unterlage aufliegenden Ski die Geschwindigkeits- und Zeitsignale zuführt und beim Abheben des Skis auf einen Schrittzähler um bzw. die Anzeige- oder die Auswertungseinheit um einen wählbaren Festwert weiterschaltet. Eine entsprechende Ausführung ist insbesondere für den Langlauf gedacht. Die zurückgelegte Wegstrecke wird, während der Ski gleitet, also beim Abfahren und der Vorwärtsbewegung unter Doppelstockeinsatz bzw. auch während der andere Ski abgehoben ist, in der beschriebenen Weise aus Geschwindigkeit und Zeit ermittelt. Beim Abheben des Skis (Schlittschuh- oder Laufschritt) kann man der Wegberechnung einen einstellbaren Festwert, der sich beispielsweise aus der durchschnittlichen Schrittlänge des Skiläufers beim Langlauf ergibt, zugrundelegen. Es ist sogar möglich, die Unterscheidung noch weiter zu treiben. Nach einer Möglichkeit nimmt man an, daß mit beiden Beinen gleich lange Schlittschuhschritte gemacht werden. Man erfaßt dann in einem Zwischenspeicher den Gleitweg zwischen zwei Schritten mit dem betreffenden Ski und nimmt diesen Gleitweg als Festwert, der beim Abheben des Skis der Anzeige zugeführt wird. Wird zwischen zwei aufeinanderfolgenden Schritten mit dem

gleichen Ski kein Gleitweg aus der Geschwindigkeits-Zeitermittlung festgestellt, so kann man annehmen, daß ein steiler Anstieg, beispielsweise im Grätschschritt, bezwungen wird und der Auswertungs- bzw. Anzeigeeinheit einen entsprechend kleineren Festwert für jeden Schritt zuführen. Für sehr aufwendige Messungen kann man auch beide Skier, mit eigenen, je eine Meßstrecke definierenden Meßeinrichtungen ausstatten.

Weitere Einzelheiten und Vorteile des Erfindungsgegenstandes gehen aus der nachfolgenden Zeichnungsbeschreibung hervor.

In der Zeichnung ist der Erfindungsgegenstand beispielsweise veranschaulicht. Es zeigt

Fig. 1 eine prinzipielle Anordnung von Sender und Empfänger einer erfindungsgemäßen Einrichtung in Draufsicht,

Fig. 2 ein Blockschaltschema der erfindungsgemäßen Einrichtung und

Fig. 3 in einer der Fig. 1 entsprechenden Darstellung eine Meßeinrichtung mit zwei Empfängern.

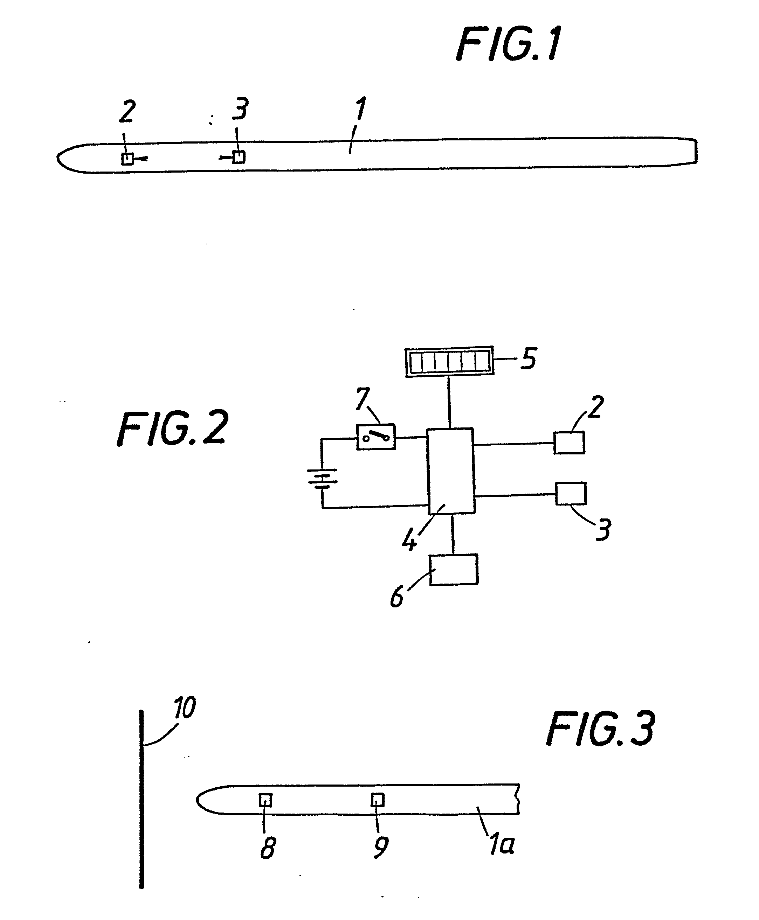

Nach den Fig. 1 und 2 sind auf einem Ski 1 in einem vorbestimmten, eine Meßstrecke definierenden Abstand voneinander ein Ultraschall-Impulssender 2 und ein Empfänger 3 angeordnet. Der Ultraschall-Impulssender wird von einem Rechner 4 gesteuert und sendet in vorgewählten Zeitabständen kurze Ultraschall-Impulse aus, die durch die Luft zum Empfänger 3 gelangen, in elektrische Impulse rückverwandelt und dem Rechner 4 wieder zugeführt werden. Der Rechner 4, insbesondere ein Mikroprozessor ermittelt die zwischen Senden und Empfangen des Impulses verstreichende Laufzeit dieses Impulses in der Luft, wobei sich diese Laufzeit abhängig von der Geschwindigkeit des Skis 1 in Richtung der Meßstrecke ändert und berechnet aus der Zeitänderung die Geschwindigkeit des Skis. Die Geschwindigkeit kann auf einer Anzeige 5, die entweder am Ski 1 angebracht ist oder über Drähte bzw. drahtlos mit dem Rechner in Verbindung steht, angezeigt werden. Dabei kann man entweder eine fortlaufende Anzeige oder eine periodische Anzeige bzw. Speicherung vorsehen. Will man die zurückgelegte Wegstrecke ermitteln, kann man aus der errechneten Geschwindigkeit und einem beispielsweise aus dem Eigentakt des Rechners 4 abgeleiteten Zeitsignal auch den Weg berechnen und anzeigen. Für den Rechner kann eine äußere Eingabeeinheit 6 vorgesehen sein, über die Korrekturwerte zur Berücksichtigung der Außentemperatur, der Windgeschwindigkeit usw. eingegeben werden können. Ferner kann man einen lage- oder druckabhängigen Schalter 7 vorsehen, der bei Langlaufskiern im Bindungsbereich angebracht wird und eine Geschwindigkeits- bzw. Wegberechnung aus der Laufzeitänderung der Signale vom Sender 2 zum Empfänger 3 nur bei auf der Unterlage aufruhendem Ski zuläßt. Der Schalter 7 kann auch ein Umschalter sein, der beim Abheben des Skis eine Weiterschaltung der Anzeige um einen Festwert steuert.

Bei der Ausführung nach Fig. 3 besitzt ein Ski la zwei Fenster 8, 9 durch die hindurch die überfahrene Wegstrecke über optische Fühler abgetastet wird. Die Fühler werden periodisch empfindlich geschaltet. Wird eine Wegmarkierung 10 von dem am Fenster 8 angebrachten Fühler erfaßt, so wird dadurch eine Zeitmeßeinrichtung gestartet und beim Erfassen der Wegmarkierung 10 durch den am Fenster 9 angebrachten Fühler wieder gestoppt. Die Fenster 8, 9 bestimmen eine Meßstrecke. Aus der Länge dieser Meßstrecke und dem Zeitintervall der Erfassung der gleichen Markierung an den beiden Fenstern läßt sich mit einem angeschlossenen Rechner wieder die Geschwindigkeit und aus dieser und der Zeit der Weg berechnen.

Patentansprüche :

1. Einrichtung zur Messung von Weglängen oder Geschwindigkeiten, insbesondere bei unter Fortbewegung eines Sportgerätes entlange eines Weges ausgeübten Sportarten, bei der am Sportgerät selbst ein auf Wegemarken empfindlicher Empfänger angeordnet ist, der durch Erfassung der Wegemarken Signale erzeugt und dem eine Auswerteeinheit und eine von dieser gesteuerte Anzeige- oder Speichereinheit nachgeordnet ist, dadurch gekennzeichnet, daß am Sportgerät (1, 1a) in dessen möglicher Fortbewegungsrichtung eine Meßstrecke vorgesehen ist, an deren einem Ende der Empfänger (3) und an deren anderem Ende ein weiterer auf die gleichen Wegemarken empfindlicher Empfänger oder ein Wegemarkenerzeuger (2) angebracht sind, und daß die Auswerteeinheit (4) ein Zeitmeßglied zur Bestimmung des zeitlichen Abstandes der Erfassung der gleichen Wegemarken (10) durch die Emfpänger bzw. des Setzens und Erfassens jeder Wegemarke enthält.

2. Einrichtung nach Anspruch 1, dadurch gekennzeichnet, daß ein Rechner (4) der Auswerteeinheit die zurückgelegte Wegstrecke aus der sich aus dem zeitlichen Abstand des Auftretens bzw. Erfassens der Signale an den Enden der Meßstrecke ergebenden Geschwindigkeit und einem ihm zugeführten Zeitsignal berechnet.

3. Einrichtung nach Anspruch 1 oder 2, dadurch gekennzeichnet, daß für den Rechner (4) Eingabeeinheiten (6) zur Berücksichtigung äußerer Parameter, insbesondere der Absolutlänge der Meßstrecke, der Temperatur oder der Windgeschwindigkeit vorgesehen sind.

**0159312**

4.  Einrichtung nach einem der Ansprüche 1 bis 3, dadurch
    gekennzeichnet, daß auf dem als Ski (1, 1a) ausgebil-
    deten Sportgerät ein auf den Auflagedruck oder die
    Neigung empfindlicher Umschalter (7) vorgesehen ist,
    der dem Rechner bzw. der Auswertungseinheit (4) bei auf
    der Unterlage aufliegendem Ski die Geschwindigkeits-
    und Zeitsignale zuführt und beim Abheben des Skis (1)
    auf einen Schrittzähler um - bzw. die Anzeige- oder die
    Auswertungseinheit (5) um einen wählbaren Festwert
    weiterschaltet.

1/1

0159312

**FIG.1**

2  3  1

**FIG.2**

5

7

2

4

3

6

10

**FIG.3**

8  9  1a

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | US-A-4 245 334 (BIERAMPERL) <br> * Spalte 2, Zeilen 53-59; Figuren 1,2 * | 1 | G 01 P 3/64 <br> G 01 C 22/02 <br> G 07 C 1/22 |
| Y | GB-A- 25 487 (A.G. NOBLE) <br> * Seite 2, Zeilen 37-46; Figuren * | 1 | |
| A | FR-A-1 472 555 (LICENTIA) <br> * Seite 1, Spalte 2, Zeile 35 - Seite 2, Spalte 2, Zeile 39; Figuren * | 1 | |
| A | FR-A- 932 083 (HUGHES & SON u.a.) <br> * Seite 2, Zeile 79 - Seite 3, Zeile 8; Figur 1 * | 1 | |
| A | US-A-4 112 756 (MacLENNAN et al.) <br> * Spalte 2, Zeile 50 - Spalte 3, Zeile 65; Figur 1 * | 1 | RECHERCHIERTE SACHGEBIETE (Int. Cl.4) <br><br> G 01 P <br> G 01 C <br> G 01 S <br> G 04 F |
| A | GB-A-2 012 087 (NISSAN MOTOR COMP. LTD.) <br> * Seite 1, Zeilen 27-45; Figuren 1,4 * | 2,3 | G 07 C |

Der vorliegende Recherchenbericht wurde für alle Patentansprüche erstellt.

| Recherchenort <br> DEN HAAG | Abschlußdatum der Recherche <br> 05-06-1985 | Prüfer <br> HANSEN P. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82